# EUROPEAN PATENT SPECIFICATION

(11) **EP 1 367 812 B1**
(45) Date of publication and mention of the grant of the patent: **19.12.2012**
(21) Application number: 03076608.3
(22) Date of filing: 26.05.2003
(51) Int. Cl.: H04N 1/387

(54) **Method and apparatus for eliminating seams in screened image data for repetitive printing**
Verfahren und Vorrichtung zur Vermeidung von Nähten in gerasterten Bilddaten für Endlosdruckverfahren
Procédé et dispositif permettant l'élimination des raccords dans des données d'images tramées pour l'impression en continue

(30) Priority: 24.05.2002 US 383479 P
(43) Date of publication of application: 03.12.2003
(73) Proprietor: ESKO SOFTWARE BVBA, 9051 Gent (BE)
(72) Inventor: KLEIN, Thomas, 38302 Wolfenbuettel (DE); KAY, Nils, 25524 Itzehoe (DE); JENSEN, Kim Skovgard, 2200 Copenhagen (DK)
(74) Representative: Bird, Ariane

(56) References cited:
- EP-A1- 0 558 008
- US-A- 5 790 273
- KATHRIN WETZEL: "Hand Engraving...." INTERNET ARTICLE, [Online] XP002315741 Retrieved from the Internet: URL:www.wetzel.de/index.php?id=114>

## Description

### BACKGROUND

The invention relates to pre-press, and in particular to preparing data for repetitive imaging of a screened image on a flexographic printing sleeve or roller.

At present, flexography is one of the main printing processes. A flexographic ("flexo") sleeve, normally rubber or photopolymer, is fabricated in such a way that the areas corresponding to zones to be inked are geometrically higher than the areas corresponding to zones not to be inked. Contacting the flexo sleeve with an inking roller, such as an anilox roller, inks the flexo sleeve. Only the geometrically higher zones of the flexo sleeve are inked, other areas are not inked. Subsequently, the inked flexo sleeve is brought in contact with a substrate and the inked parts transfer ink onto the substrate, thus producing the desired image on the substrate.

In flexography, there is demand for printing continuous designs such as wallpaper, decoration and gift wrapping paper. In general, such flexography applications use a cylindrical form, usually a printing sleeve or a cylindrical printing cylinder formed by fusing the edges of a sheet together to form a seamless, continuous element. Such continuous printing elements are well suited for mounting on conventional laser exposing equipment ("imagers") such as the Esko-Graphics Cyrel® Digital Imager (Esko-Graphics, Gent, Belgium) or flexography engravers available from ZED Instruments Ltd. (Hersham, Surrey, England) or Applied Laser Engineering Ltd. (West Molesey, Surrey, England).

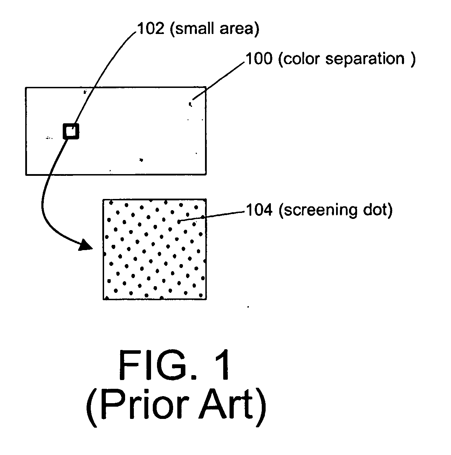

Many designs typically need to be screened (halftoned) before being output on an imagesetter or engraver. Screening of separated data is performed using a Raster Image Processor (RIP), that converts the continuous-tone (contone) data of each of a set of color separations into a binary image, e.g., a bitmap by replacing the "gray" values in the original color separation data by screening dots of proper area density. FIG. 1 shows a color separation 100 after screening with an area 102 enlarged so that the screening pattern of screening dots such as dot 104 is visible. Most modern screens are defined by a screen resolution, a screen angle, a line-count (also called screen ruling), and a dot shape. Each of the color separations is thus screened. The characteristics of the different colors' screens are chosen so that they can combine to form a color image having negligible artifacts such as Moiré patterns.

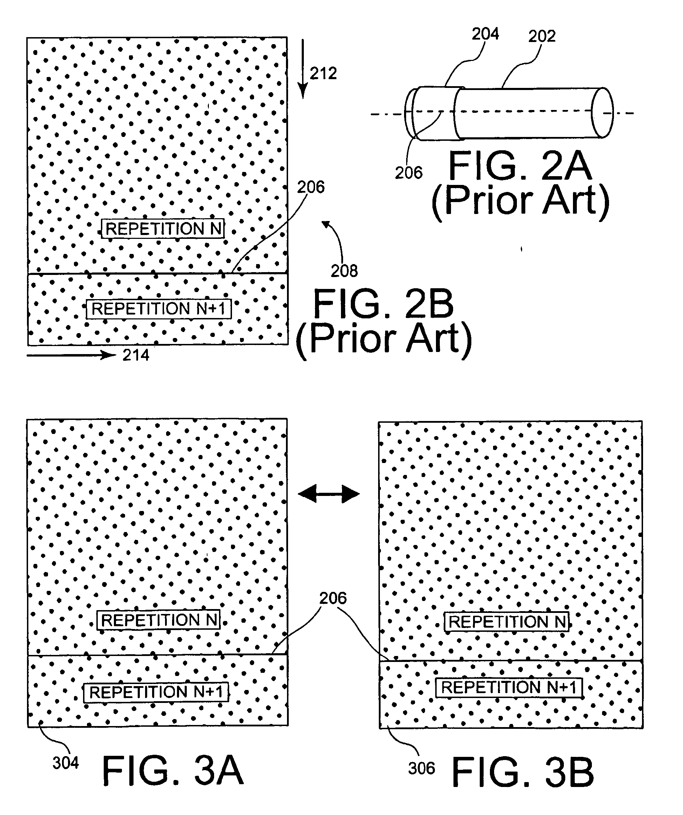

For continuous designs, it is desirable to select the screen characteristics so that the screen repeats exactly with the circumference of the sleeve or roller in the fast-scan direction of the imager, e.g., the circumferential direction in the case of a drum imager. The circumferential zero-line position is the line of repetition, i.e., the circumferential position where the imaging commences on the sleeve of the drum, and every circumferential position that is an integral number of rotations away. If the screen does not repeat with the circumference, the mismatch between the screening on the sides of the line of repetition―the circumferential zero-line―results in a visible seam in the print. The circumferential zero-line is thus also called the seam herein. FIG. 2A shows a drum 202 with a sleeve or roller 204 attached. FIG. 2B shows in enlarged form the image 208 on the drum region that includes the circumferential zero line shown as 206. The circumferential direction is shown as the fast-scan direction 212 and the axial direction as is the slow-scan direction 214. As can be seen, unless care is taken, an undesirable mismatch pattern forms at the seam.

Special screens and screening techniques have been developed for continuous printing to prevent the appearance of such a visible seam. However, using such special "seamless" screens may have some limitations. For example, forcing the seamless property may restrict the combinations of line-counts, imaging resolution, and dot shapes that are available. Furthermore, there are many RIPs already installed that are not able generate such seamless screens. Furthermore, there the separations may include one or more areas of pre-scanned, pre-screened art, and for such art, the screens are pre-determined.

There thus is a need for a method to process a set of already screened separations, at least one of which has a mismatch in the screening pattern along the circumferential zero-axis of the sleeve or roller in order to either eliminate or at least hide the mismatch so that continuous designs may be printed without a visible seam.

In the prior art different methods can be found for avoiding mismatches at the seam of repetitive images.

US Patent 5 790 273 (HORFARTER) discloses a method and apparatus for producing a gray scale stencil in which an image pattern, bounded by edges, is transferred with a grey-shade grid superimposed on it into a radiation sensitive base. The network lines, constituting the grid, are aligned at a selectable angle with respect to the image edges. In the case of gravure of cylindrical screen cylinders, the additive image which is provided with grid information, is applied once over the circumference of the screen cylinder to be engraved. In order to avoid mismatches of the grid at the line of repetition, the grid is slightly distorted by scaling and rotation.

EP Published Patent Application 558008 A1 discloses a method for correcting color tone deviations at the boundary portion of a repeated basic image. The deviation correction is done by replacing the value of a pixel data by the average value of a group of pixel data.

This object of the present invention is achieved by the method and apparatus as described in the independent claims.

Further embodiments of the invention are described in the dependent claims.

### SUMMARY

Disclosed herein is a method and an apparatus for processing a screened separation to produce a processed screened separation for continuous imaging on a flexo sleeve or roller such that there is substantially no visible seam in a repeating print of the image.

In one embodiment, the screened file is cut so that the size of the image in the circumferential direction is an integral number of screening supercells. In an improved version, the image is stretched to restore the original image size.

In another embodiment, the screening dots are analyzed in the neighborhood of the circumferential zero line of the sleeve or roller, and slightly displaced to eliminate the mismatch between both screening zones in this area, to eliminate the appearance of a visible seam in a repeating print of the image.

### BRIEF DESCRIPTION OF THE DRAWINGS

FIG. 1 shows a color separation 100 after screening with an area 102 enlarged so that the screening pattern of screening dots such as dot 104 is visible.
FIG. 2A shows a drum output device with a sleeve attached.
FIG. 2B shows a screen mismatch along the circumferential zero line of the printing sleeve or roller.
FIG. 3A shows a prescreened separation that includes a mismatch along the circumferential zero-line.
FIG. 3B shows the results of processing the screened image data according to an embodiment of the invention to produce a separation with substantially no mismatch along the circumferential zero-line.
FIG. 4 shows a screened image with tiles of supercells.
FIG. 5A shows a simple example of a screened image made seamless by a method embodiment of the invention that includes cutting the image so the image length in the circumferential direction is an integral number of supercells.
FIG. 5B shows a simple example of the cut image of FIG. 5A stretched to maintain the image size according to an improved embodiment that includes cutting the image.
FIG. 6A shows a bottom area and a top area of the next repetition of a repeating screened image.
FIG. 6B shows how the image of FIG. 6A can be made seamless by a halftone dot displacement method embodiment of the invention in which the halftone dots in the neighborhood of the seam are properly displaced.
FIG. 6C shows one variation of the halftone dot displacement method.
FIG. 6D shows another variation of the halftone dot displacement method.
FIG. 7 shows a computer system in which the present invention may be implemented.
FIG. 8 shows a flowchart of one embodiment of the invention that includes cutting the image length to an integral number of supercells in the circumferential direction.
FIG. 9 shows a flowchart of another embodiment of the invention that includes displacing halftone dots in the neighborhood of the seam.
FIG. 10 shows a flowchart of yet another embodiment of the invention that includes displacing halftone dots in the neighborhood of the seam.

### DETAILED DESCRIPTION

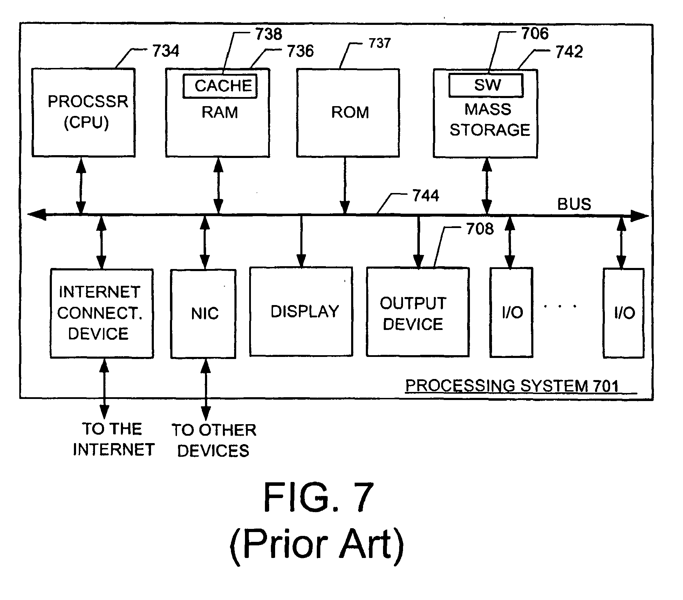

Method embodiments of the invention are implemented on a computer system that includes one or more processors, memory, and a storage subsystem. However, alternate embodiments of the invention may be embodied in dedicated devices such as imagesetter controllers. FIG. 7 is a simplified block diagram of a computer system 701 in which method embodiments may be embodied. The computer system includes one or more processors 734, a storage subsystem 742, and a memory subsystem 736 that includes random access read/write memory (RAM), a cache 738, and a read-only memory (ROM) 737. The computer system shown in FIG. 7 includes other elements that communicate via a bus subsystem 744, as is standard. The term "bus subsystem" is used generically to include any mechanism for letting the various components of the system communicate with each other. A computer system such as shown in FIG. 7 is standard, so the drawing is labeled "Prior Art." A computer system such as system 701 suitably programmed to embody one or more aspects of the present invention, however, is not prior art. In one embodiment, the method is provided in the form of a computer program (software 706) that is stored in the storage subsystem 742. That is, a carrier medium is provided that carries one or more computer readable code segments that instruct one or more of the processors 734 to carry out the steps of the inventive method. It is when the software 706 in mass storage 742 instructs the processor(s) 734 to carry out the steps of any of the novel methods described herein where FIG. 7 ceases to be prior-art.

FIG. 3A shows a prescreened separation 304 that includes a mismatch along the circumferential zero-line 206. FIG. 3B shows the results of processing the screened image data by one of the embodiments of the present invention to produce a separation 306 with substantially no mismatch along the circumferential zero-line 206.

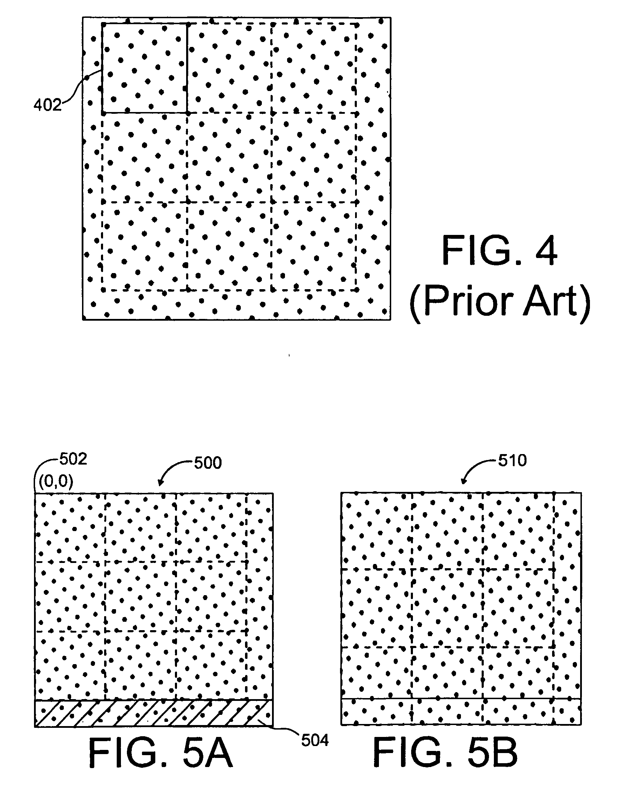

Modem screening techniques use threshold arrays, also called supercells. The screening process is equivalent to placing a threshold array over the image. The screening includes comparing the values in the threshold array with the values in the original image beneath the array to determine if the resulting binary data is to be on (printed) or off. The threshold array, also called the supercell, is typically far smaller than the image to be screened, so the threshold array is repeated in two dimensions in order to fill the complete original image. This is sometimes called tiling the supercell. FIG. 4 shows such tiling in an exaggerated manner. Nine supercells are shown, with supercell 402 being one such supercell. Each supercell includes several halftone dots and generates a screened image having a screen ruling, a screen angle, and dots having a dot shape.

A first method embodiment of the invention is applicable to images screened using supercells. The method also is applicable to any screening method that uses repeating cells, so the term "supercell" will be used herein to represent any such repeating cell and how to adapt the description herein to apply to any particular type of repeating cell would be clear to one in the art.

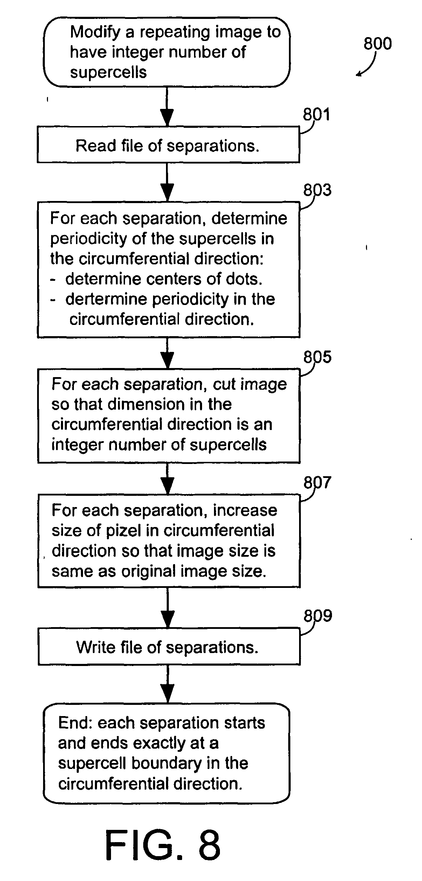

FIG. 8 shows a flow chart of one embodiment 800. An image to be repeated in the circumferential direction is provided in the form of a file containing a set of one or more color separations. FIG. 5A shows one such separation of the image 500. For the purpose of illustrating the method, the image has an exaggerated screening pattern and includes only three supercells in the circumferential direction. In one embodiment, the processing is carried out separation by separation. In a step 801, the image file is read from storage. In a step 803, each separation in the file of separations is analyzed to find the period of the screening supercell in the circumferential direction. The left upper corner 502 of the image, defined as the zero positions in circumferential and axial directions and denoted (0,0), is arbitrarily set as the start of the supercell. In one embodiment, the analysis to determine the periodicity includes determining the centers of the halftone dots, and then searching for periodicity in the location of the centers in the circumferential direction. In an alternate embodiment, where it is determined that there is a region of approximately uniform gray level in the separation, the periodicity is determined by examining a single scan line in the circumferential direction in the region of approximately uniform gray-level. In step 805, the image is cut at the lowest edge in the circumferential direction so that the image size in the circumferential direction is an integral number of supercells. That is, each separation is cut such the image starts and ends exactly at the boundary of a supercell in the circumferential direction. In FIG. 5A, the region cut is shown as region 504. The final cut image is stored in a step 809, or, in an embodiment that processes images on-the-fly, for example in a controller for a drum imaging device, the image files may be output to the imaging device.

The inventors discovered that in most practical cases, the size of the image is reduced by a relatively small amount, e.g., in the order of about 100 µm in the circumferential direction. This is acceptable for typical flexographic printing applications. The average size cut is one half of a supercell period in the circumferential direction, and the maximum cut is smaller than the size of one supercell in the circumferential direction.

In an alternate embodiment, a step 807 is included in which the original size of the image is restored after cutting by uniformly enlarging the image in the circumferential direction. This may be carried out in one embodiment by enlarging the size of each pixel in the circumferential direction while not changing the number of pixels in that direction.

FIG. 5B shows an image 510 that results from cutting (step 805) and stretching (step 807) the image 500 of FIG. 5A.

In yet another alternate embodiment, instead of stretching the image, the circumference of the sleeve or roller is slightly modified so that the cut image fits.

In yet another alternate embodiment, steps 803 and 805 are repeated in the axial direction. That is, the image data is analyzed to determine the supercell period in the axial direction, and the image is also reduced in the axial direction so that the axial dimension of the image is an integral number of supercells. In an another version of the embodiment, step 807 is also repeated in the axial direction, i.e., the image is stretched in the axial direction such that the image size in the axial direction is maintained.

The inventors discovered that while the above described embodiments work well in many cases, there are some cases wherein cutting, even with stretching, does not always produce pleasant results when slanted elements, e.g., lines or scanned images such as photographs are located at the image boundaries in circumferential direction.

Furthermore, there may be other situations where cutting is undesirable. For example, the different separations in a color image file have screens at different screen angles. In some image files, the different separations may also have different supercell sizes, so that each of the separations may have a different amount cut in step 805, and thus, in step 807, each separation may end up having a different pixel size. While this should not be a problem in general, in some cases, there may be undesirable effects. Thus, the inventors also investigated embodiments that avoid cutting.

A second method embodiment of the invention includes modifying the position of individual screening dots to eliminate the screening mismatch between upper and lower edge of the image, i.e., at the seam. In addition, in one version, the halftone dots directly located at the upper and lower edges of the image that are not whole are repaired so that the dot size matches the average gray level of the original (uncut) dot.

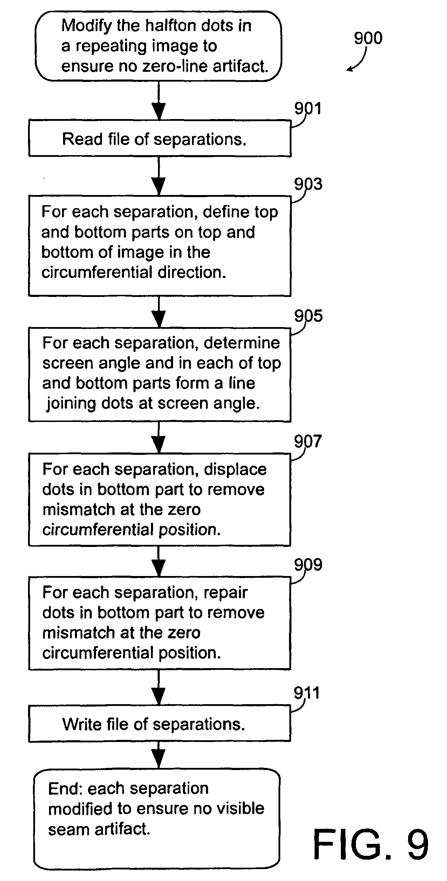

FIG. 9 shows a flowchart of a second method embodiment 900. In a step 901, the image file that includes a set of one or more color separations is read. In a step 903, for each separation, a neighborhood of the circumferential zero-line, i.e., of the seam is selected. In one embodiment, the neighborhood includes a top part (or side part) and a bottom part (or opposite side part) in the neighborhoods of the upper and lower edges (or opposite side edges) of the image, respectively. For the remainder of the description, top to bottom is assumed to be in a circumferential direction when the image is imaged on a drum. In one embodiment, the height in the circumferential direction of each area of the neighborhood is selected to be approximately ten times the average distance between the centers of two neighboring screening dots, while the width of each neighborhood part is at least the width of the image in the axial direction. While other embodiments may use a different size height, the inventors found that a factor often is sufficient to obtain acceptable results.

In a step 905, the center positions of all screening dots in the neighborhood are determined for each separation. For each separation, the angle of the dots, i.e., the screen angle is determined and in each area, a line joining the dots at the determined screen angle is formed.

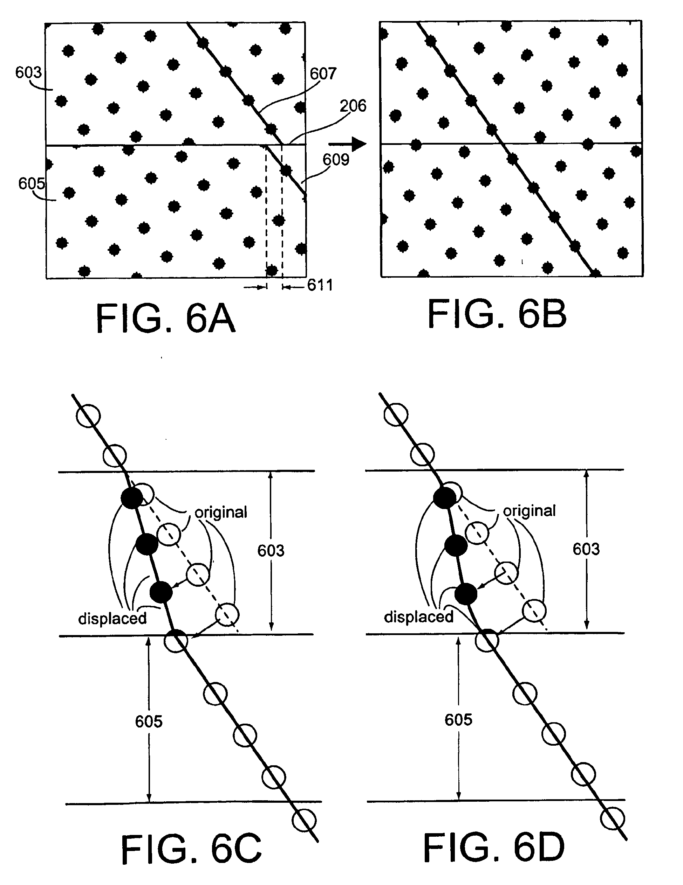

FIG. 6A shows the bottom neighborhood part 603 of an image and the top neighborhood part 605 of the next repetition of the image. Line 206 is the circumferential zero-line. The line 607 joins the halftone dots in the bottom neighborhood part at the screen angle and the bottom line 609 joins the halftone dots in the top neighborhood part at the screen angle. As can be seen, there is a mismatch of a finite width 611 in the axial direction. Thus, in one embodiment, axial distance 611 is used as a measure of the mismatch.

In a step 907, for each separation, the halftone dots in the bottom neighborhood part 603 are displaced by a relatively small amount such that the line at the screen angle joining the halftone dots in the top neighborhood part meets the line at the screen angle at the top neighborhood part at the circumferential zero line and the mismatch is substantially diminished. The result is shown in FIG. 6B in which the measure of mismatch 611 is zero. In one embodiment, the dots are moved in the direction normal to the screen angle in proportion to the circumferential distance from the top of the bottom area, i.e., in inverse proportion to the circumferential distance from the seam. This is shown in FIG. 6C. The positions of the upper screening dots in the selected areas remain fixed in position. One version moving the dots in proportion to the distance corresponds to changing the screen angle in the bottom area near the seam.

In another embodiment, the dots are moved in the direction normal to the screen angle such that the line joining the halftone dots retains smoothness, i.e., the gradient of the line has no discontinuities. This is shown in FIG. 6D.

In yet an alternate embodiment, the dots in both parts of the neighborhood are displaced. In one version of such an alternate embodiment, the neighborhood forms substantially the whole image, so that the halftone dot displacement is equivalent to slightly changing the screen angle on the image.

In yet another embodiment, the dot displacement occurs in a significant part of the image. In one version of such an other embodiment, the neighborhood forms substantially the whole image, so that the halftone dot displacement occurs in approximately half the image.

In a step 909, in each separation, dots that were cut are restored to the correct gray value, and dots that are newly cut are reduced in area corresponding to the cut. In one embodiment, those screening dots that previously were completely in the bottom area of the seam neighborhood but that are cut by the bottom edge after displacement are modified to have an area in proportion to the amount remaining. Furthermore, in the embodiment in which halftone dots in the top half also are displaced, some of the dots were previously cut ("partial dots") and now are fully in the top neighborhood part are restored. Pixels are added to such partial dots originally located directly at the upper and lower edges to create a dot of a size that matches the average gray level of dots in a region surrounding the partial dot. For this, the gray level of the region surrounding the partial pixel is determined. The inventors found that a region of 5 screening dots in the circumferential direction by 5 screening dots in the axial direction produces pleasant results. Other embodiments may select a different region size.

Step 911 writes the data after modification to the file system.

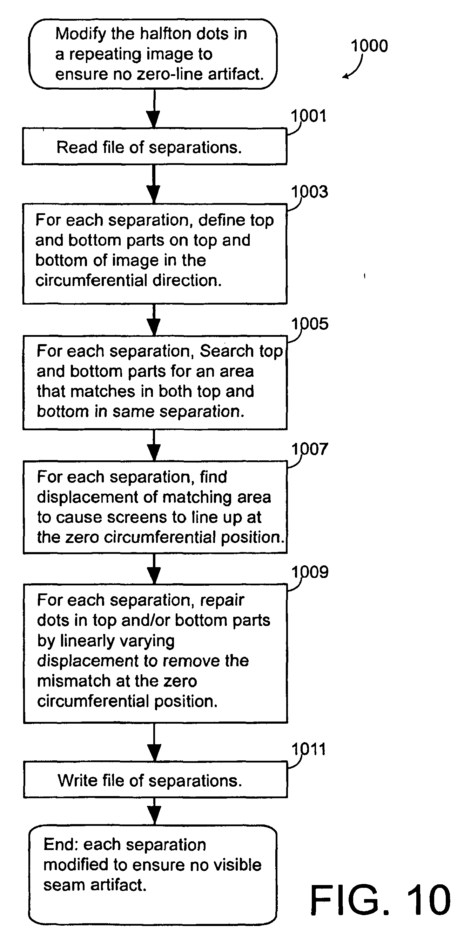

FIG. 10 shows a flowchart of another method embodiment 1000. In a step 1001, the image file that includes a set of one or more color separations is read. In a step 1003, for each separation, a neighborhood of the circumferential zero-line, i.e., of the seam is selected. The neighborhood includes a top part and a bottom part in the neighborhoods of the upper and lower edges of the image, respectively. Again, top to bottom is assumed to be in a circumferential direction when the image is imaged on a drum. In one embodiment, the height in the circumferential direction of each neighborhood part is selected to be 128 pixels, while the width of each neighborhood part is at least the width of the image in the axial direction.

In a step 1005, the top and bottom parts of the neighborhood are searched for an area that exists in both top and bottom parts and wherein there is a well-defined halftone screen. As part of step 1005, screen estimation is carried out on the area that exists in both the top and bottom parts, including determining one or more parameters of the screen, such as the screen ruling of the area. The results of such screen estimation in the matched area in the top and bottom parts are averaged. In one embodiment, the area matched for is 128 by 128.

In a step 1007, for each separation, the displacement is determined using the screen ruling found in the screen estimation that would cause the screens to line up at the zero-circumferential position. One embodiment uses a correlation operation on the matching 128 by 128 areas in the top and bottom parts. The correlation includes appropriate windowing and pre-filtering as would be known to those in the art.

In a step 1009, for each separation, the pixels in the top and bottom parts are displaced in the axial direction by an amount linearly dependent on the distance from the zero circumferential position such that the pixels are displaced in total by the displacement found in step 1007 at the zero circumferential line, and not displaced at the opposite end of the top and bottom areas so that there is a match at the zero circumferential position. In another embodiment, the displacement is carried out on the pixels of only one part: the top part or the bottom part.

One version of step 1009 further includes filtering the data in the top and bottom areas (or only in one part in the case that only data in one part was displaced) to smooth the halftone dot shapes and to remove discontinuities at the seam. Another version does not include this smoothing. The inventors have found the smoothing step not necessary in the samples used to test the technique.

Step 1011 writes the data after modification to the file system.

The methods described herein may be implemented by a hardware device that forms a hardware controller for a drum imaging device. One embodiment includes a processing system that carries out the steps of the method. The processing system may be as shown in FIG. 7 or a subset thereof. The apparatus includes means for inputting the image data, e.g., from the storage subsystem 742, and means for outputting the image. In one version, the image is output back to storage, while in another, the image is output to a memory, e.g., part of the memory system 736, for direct output to a drum-imaging device. The drum output device in such a case is the output device shown as 708 in FIG. 7.

An embodiment of the invention also may be provided in the form of a carrier medium carrying computer readable code segments that cause one or more processors 734 of a processing system such as shown in FIG. 7 to implement one or more of the method embodiments described herein. One example of such a carrier medium is a computer software product. The software may be provided in one of many forms, e.g., a CD-ROM, a magnetic medium, and so forth. Such software may be loaded into the storage of the computer system. In FIG. 7, software 706 in mass storage 742 is such a set of computer readable code segments.

Various modifications are possible. For example, in the dot displacement embodiment, various types of displacements are possible in the region close to the seam. furthermore, while an embodiment is described that includes displacing the halftone dots in the bottom of the image in the circumferential direction, in alternate embodiment, the top of the image is modified while the halftone dots in the bottom area are not displaced.

In step 805 of the image size reduction embodiment, the image is cut at the lowest edge in the circumferential direction so that the image size in the circumferential direction is an integral number of screen cells. Alternate embodiments cut the image at another location or at more than one location such that the image size in the circumferential direction is an integral number of screen cells.

It is to be noted also that while the embodiments described herein are for an external drum scanner, other configurations also are possible.

It is to be noted furthermore that, while methods are described above that involve modifications in a top area and a bottom area in the neighborhoods of the upper and lower edges of the image, those in the art will understand that these methods are equally applicable to the left and right edges, respectively, so that in the description above and in the claims, top and bottom can be interpreted as opposite edges, e.g., upper and lower edges or left and right edges.

Thus, while some embodiments of the invention have been described herein, those skilled in the art will recognize that modifications may be made, and it is intended that all such modifications shall fall within the scope of the invention which is to be limited only by the claims.

## Claims

1. A method for modifying a screened image for repeated reproduction along a circumferential direction, the method comprising:
analyzing the image in a neighborhood of a seam (206) between upper and lower edge of the image to determine any screening mismatch between the upper and lower edge of the image, upper to lower being defined in the circumferential direction
the method being further **characterized in that** it comprises modifying a position of halftone dots in case a screening mismatch occury (Fig. 6C, Fig. 6D) in the neighborhood of the seam to eliminate the screening mismatch at the seam whereby the neighborhood consists of a top part (605) and a bottom part (603),
wherein the position modifying includes:
- determining a displacement that would cause the screens to line up at the seam, the displacement determining using correlation between upper and lower screen and
displacing (907) the halftone dots of the neighborhood of the seam such that the total relative displacement at the seam is the determined displacement, and such that there is no displacement at the borders of the neighborhood parts away from the seam.

2. A method as recited in claim 1, wherein the halftone dot displacement occurs in both the top and the bottom parts, and wherein the halftone dots are displaced in inverse proportion to the circumferential distance from the seam.

3. A method as recited in claim 1 or 2, wherein the analyzing includes:
determining the centers of the halftone dots and the screen angle of the screen in each of the areas of the neighborhood; and
forming a line (609, 607) joining halftone dots at the screen angle in each of the top area and a bottom area of the neighborhood.

4. A method as recited in claim 1, wherein the halftone dot position modifying is such that the dots are displaced in inverse proportion to the circumferential distance from the seam in one area of the neighborhood while the positions of the halftone dots in the other area remain fixed (Fig. 6C).

5. A method as recited in any of claims 3 or 4, wherein the halftone dot position modifying moves the halftone dots such that the line joining the halftone dots retains smoothness (Fig. 6D).

6. A method as recited in any of claims 1 to 5, further comprising:
repairing (909) each partial halftone dot that is originally located at the edge of the image that becomes whole after displacement.

7. A method as recited in claim 6, wherein the repairing of a halftone dot includes determining an average gray level in a region surrounding the halftone dot and adding pixels to the halftone dot to increase its area such that the halftone dot size matches the average gray level of the region.

8. A method as recited in any of claims 1 to 7, wherein the halftone dot position modifying displaces dots in one area while the halftone dots in the other area remain fixed.

9. A method as recited in any of claims 1 to 8, wherein the neighborhood is small compared to the total size of the image in the circumferential direction.

10. A method as recited in any of the claims 1 to 9, wherein the height in the circumferential direction of each area of the neighborhood is selected to be approximately ten times the average distance between the centers of two neighboring screening dots.

11. A method as recited in any of claims 1 to 9, wherein the neighborhood is a significant part of the image.

12. A method as recited in any of claims 1 to 9, wherein the neighborhood is substantially equal to the total image, such that the halftone dot position modifies the screen angle of the screen.

13. An apparatus to modify a screened image for repeated reproduction along a circumferential direction, the apparatus comprising:
means (905) for analyzing the image in a neighborhood of the seam between upper and lower edge of the image to determined any screening mismatch between the upper and lower edge of the image **characterized in that** the apparatus further comprises
means (907) for modifying the position of halftone dots in case a screening mismatch occurs in the neighborhood to eliminate the screening mismatch at the seam whereby the neighborhood consists of a top part (605) and a bottom part (603),
wherein means for modifying the position includes:
- means for determining a displacement that would cause the screens to line up at the seam, the displacement determining using correlation between upper and lower screen and
means for displacing (907) the halftone dots of the neighborhood of the seam such that the total relative displacement at the seam is the determined displacement, and such that there is no displacement at the borders of the neighborhood parts away from the seam.

14. An apparatus to modify a screened image for repeated reproduction along a circumferential direction according to claim 13 whereby the apparatus comprises a processing system including a processor programmed to perform said analyzing the image in a neighborhood of the seam between upper and lower edge of the image to determine any screening mismatch between the upper and lower edge of the image, and to perform said modifying the position of halftone dots in the neighborhood to eliminate the screening mismatch at the seam.

15. An apparatus to modify a screened image for repeated production along a circumferential direction according to anyone of the claims 13 to 14, wherein the height in the circumferential direction of each area of the neighborhood is selected to be approximately ten times the average distance between the centers of two neighboring screening dots.

16. An apparatus to modify a screened image for repeated production along a circumferential direction according to anyone of the claims 13 to 14, wherein the neighborhood is substantially equal to the total image, such that the halftone dot position modifies the screen angle of the screen.

17. A carrier medium carrying one or more computer readable code segments that cause one or more processors of a processing system to carry out a method according to any of the claims 1 to 12.

## Patentansprüche

1. Verfahren zum Modifizieren eines Rasterbildes für eine wiederholte Wiedergabe entlang einer Umfangsrichtung, wobei das Verfahren umfasst:
Analysieren des Bildes in einem Nahbereich einer Fuge (206) zwischen einem oberen und unteren Rand des Bildes zur Bestimmung einer Rasterfehlübereinstimmung zwischen dem oberen und unteren Rand des Bildes, wobei oberer bis unterer in die Umfangsrichtung definiert sind,
wobei das Verfahren ferner **dadurch gekennzeichnet ist, dass** es umfasst:
Modifizieren einer Position von Halbtonpunkten, falls eine Rasterfehlübereinstimmung auftritt (Figur 6C, Figur 6D), im Nahbereich der Fuge zur Beseitigung der Rasterfehlübereinstimmung an der Fuge, wobei der Nahbereich aus einem oberen Teil (605) und einem unteren Teil (603) besteht,
wobei die Positionsmodifizierung enthält:
- Bestimmen einer Verschiebung, die eine Ausrichtung der Raster an der Fuge bewirken würde, wobei das Bestimmen der Verschiebung unter Verwendung einer Korrelation zwischen dem oberen und unteren Raster erfolgt, und
Verschieben (907) der Halbtonpunkue des Nahbereichs der Fuge derart, dass die gesamte relative Verschiebung an der Fuge die bestimmte Verschiebung ist und dass es keine Verschiebung an den Grenzen der Nahbereichsteile weg von der Fuge gibt.

2. Verfahren nach Anspruch 1, wobei die Halbtonpunktverschiebung sowohl im oberen wie auch im unteren Teil erfolgt und wobei die Halbtonpunkte in umgekehrtem Verhältnis zum Umfangsabstand von der Fuge verschoben werden.

3. Verfahren nach Anspruch 1 oder 2, wobei das Analysieren enthält:
Bestimmen der Mittelpunkte der Halbtonpunkte und des Rasterwinkels des Rasters in jeder der Flächen im Nahbereich; und
Bilden einer Linie (609, 607), die Halbtonpunkte in dem Rasterwinkel in jeder der oberen Fläche und einer unteren Fläche des Nahbereichs verbindet.

4. Verfahren nach Anspruch 1, wobei die Modifizierung der Halbtonpunktposition derart ist, dass die Punkte in umgekehrtem Verhältnis zum Umfangsabstand von der Fuge in einer Fläche des Nahbereichs verschoben werden, während die Positionen der Halbtonpunkte in der anderen Fläche unveränderlich bleiben (Figur 6C).

5. Verfahren nach einem der Ansprüche 3 oder 4, wobei die Modifizierung der Halbtonpunktposition die Halbtonpunkte derart bewegt, dass die Linie, die die Halbtonpunkte verbindet, eine Glätte beibehält (Figur 6D).

6. Verfahren nach einem der Ansprüche 1 bis 5, des Weiteren umfassend: Reparieren (909) jedes teilweisen Halbtonpunktes, der ursprünglich am Rand des Bildes liegt, der nach dem Verschieben ganz wird.

7. Verfahren nach Anspruch 6, wobei das Reparieren des Halbtonpunktes das Bestimmen eines durchschnittlichen Grauwertes in einer Region enthält, die den Halbtonpunkt umgibt, und das Hinzufügen von Pixeln zu dem Halbtonpunkt zur Vergrößerung seiner Fläche, so dass die Halbtenpunktgrbfae zu dem durchschnittlichen Grauwert der Region passt.

8. Verfahren nach einem der Ansprüche 1 bis 7, wobei die Modifizierung der Halbtonpunktposition Punkte in einer Fläche verschiebt, während die Halbtonpunkte in der anderen Fläche unveränderlich bleiben.

9. Verfahren nach einem der Ansprüche 1 bis 8, wobei der Nahbereich im Vergleich zu der Gesamtgröße des Bildes in der Umfangsrichtung klein ist.

10. Verfahren nach einem der Ansprüche 1 bis 9, wobei die Höhe in der Umfangsrichtung jeder Fläche des Nahbereichs so ausgewählt ist, dass sie etwa das Zehnfache des durchschnittlichen Abstandes zwischen den Mittelpunkten von zwei benachbarten Rasterpunkten ist.

11. Verfahren nach einem der Ansprüche 1 bis 9, wobei der Nahbereich ein signifikanter Teil des Bildes ist.

12. Verfahren nach einem der Ansprüche 1 bis 9, wobei der Nahbereich in Wesentlichen gleich dem Gesamtbild ist, so dass die Halbtonpunktposition den Rasterwinkel des Rasters modifiziert.

13. Vorrichtung zum Modifizieren eines Rasterbildes für eine wiederholte Wiedergabe entlang einer Umfangsrichtung, wobei die Vorrichtung umfasst:
ein Mittel (905) zum Analysieren des Bildes in einem Nahbereich der Fuge zwischen einem oberen und unteren Rand des Bildes zur Bestimmung einer Rasterfehlübereinstimmung zwischen dem oberen und unteren Rand des Bildes,
**dadurch gekennzeichnet, dass** die Vorrichtung ferner umfasst:
ein Mittel (907) zum Modifizieren einer Position von Halbtonpunkten, falls eine Rasterfehlübereinstimmung auftritt, im Nahbereich zur Beseitigung der Rasterfehlübereinstimmung an der Fuge, wobei der Nahbereich aus einem oberen Teil (605) und einem unteren Teil (603) besteht,
wobei das Mittel zum Modifizieren der Position enthält:
- ein Mittel zum Bestimmen einer Verschiebung, die eine Ausrichtung der Raster an der Fuge bewirken würde, wobei das Bestimmen der Verschiebung unter Verwendung einer Korrelation zwischen dem oberen und unteren Raser erfolgt, und
ein Mittel zum Verschieben (907) der Halbtonpunkt des Nahbereichs der Fuge derart, dass die gesamte relative Verschiebung an der Fuge die bestimmte Verschiebung ist und dass es keine Verschiebung an den Grenzen der Nahbereichsteile weg von der Fuge gibt.

14. Vorrichtung zum Modifizieren eines Rasterbildes für eine wiederholte Wiedergabe entlang einer Umfangsrichtung nach Anspruch 13, wobei die Vorrichtung ein Verarbeitungssystem umfasst, das einen Prozessor enthält, der zur Durchführung der Analyse des Bildes in einem Nahbereich der Fuge zwischen dem oberen und unteren Rand des Bildes programmiert ist, um eine Rasterfehlübereinstimmung zwischen dem oberen und unteren Rand des Bildes zu bestimmen und die Modifizierung der Position der Halbtonpunkte im Nahbereich durchzuführen, um die Rasterfehlübereinstimmung an der Fuge zu beseitigen.

15. Vorrichtung zum Modifizieren eines Rasterbildes für eine wiederholte Wiedergabe entlang einer Umfangsrichtung nach einem der Ansprüche 13 bis 14, wobei die Höhe in der Umfangsrichtung jeder Fläche des Nahbereichs so ausgewählt ist, dass sie etwa das Zehnfache des durchschnittlichen Abstandes zwischen den Mittelpunkten von zwei benachbarten Rasterpunkten ist.

16. Vorrichtung zum Modifizieren eines Rasterbildes für eine wiederholte Wiedergabe entlang einer Umfangsrichtung nach einem der Ansprüche 13 bis 14, wobei der Nahbereich im Wesentlichen gleich dem Gesamtbild ist, so dass die Halbtonpunktposition den Rasterwinkel des Rasters modifiziert.

17. Trägermedium, das ein oder mehrere computerlesbare Code-Segment(e) trägt, die einen oder mehrere Prozessor(en) eines Verarbeitungssystems veranlasst (veranlassen), ein Verfahren nach einem der Ansprüche 1 bis 12 auszuführen.

## Revendications

1. Procédé pour modifier une image tramée pour la reproduction répétée le long d'une direction circonférentielle, le procédé comprenant :
l'analyse de l'image au voisinage d'un raccord (206) entre un bord supérieur et un bord inférieur de l'image pour déterminer une quelconque discordance de tramage entre le bord supérieur et le bord inférieur de l'image, supérieur à inférieur étant défini dans la direction circonférentielle
le procédé étant en outre **caractérisé en ce qu'**il comprend
la modification d'une position de points en demi-teinte dans le cas où une discordance de tramage se produit (figure 6C, figure 6D) au voisinage du raccord pour éliminer la discordance de tramage au niveau du raccord de sorte que le voisinage consiste en une partie de dessus (605) et en une partie de fond (603),
dans lequel la modification de position inclut :
- la détermination d'un déplacement qui amènerait les trames à s'aligner au niveau du raccord, la détermination de déplacement utilisant une corrélation entre une trame supérieure et une trame inférieure, eL
le déplacement (907) des points en demi-teinte du voisinage du raccord de sorte que le déplacement relatif total au niveau du raccord est le déplacement déterminé, et de sorte qu'il n'y a aucun déplacement au niveau des frontières des parties de voisinage loin du raccord.

2. Procédé selon la revendication 1, dans lequel le déplacement de point en demi-teinte se produit dans les parties tant de dessus que de fond, et dans lequel les points en demi-teinte sont déplacés de façon inversement proportionnelle à la distance circonférertielle par rapport as raccord.

3. Procédé selon la revendication 1 ou 2, dans lequel l'analyse inclut :
la détermination des centres des points en demi-teinte et de l'angle de trame de la trame dans chacune des surfaces du voisinage ; et
la formation d'une ligne (609, 607) joignant ces points en demi-teinte au niveau de l'angle de trame dans chacune de la surface de dessus et d'une surface de fond du voisinage.

4. Procédé selon la revendication 1, dans lequel la modification de position de point en demi-teinte est telle que les points sont déplacés de façon inversement proportionnelle à la distance circonférentielle par rapport au raccord dans une surface particulière du voisinage tandis que les positions des points en demi-teinte dans l'autre surface restent fixes (figure 6C).

5. Procédé selon l'une quelconque des revendications 3 ou 4, dans lequel la modification de position de point en demi-teinte déplace les points en demi-teinte de sorte que la ligne joignant les points en demi-teinte conserve son lissé (figure 6D).

6. Procédé selon l'une quelconque des revendications 1 à 5, comprenant en outre :
la réparation (909) de chaque point en demi-teinte partiel qui est situé à l'origine au bord de l'image, lequel devient entier après déplacement.

7. Procédé selon la revendication 6, dans lequel la réparation d'un point en demi-teinte inclut la détermination d'un niveau de gris moyen dans une région entourant le point en demi-teinte et l'ajout de pixels au point en demi-teinte pour augmenter sa surface de sorte que la taille de point en demi-teinte correspond au niveau de gris moyen de la région.

8. Procédé selon l'une quelconque des revendications 1 à 7, dans lequel la modification de position de point en demi-teinte déplace des points dans une surface particulière tandis que les points en demi-teinte dans l'autre surface restent fixes.

9. Procédé selon l'une quelconque des revendications 1 à 8, dans lequel le voisinage est petit en comparaison à la taille totale de l'image dans la direction circonférentielle.

10. Procédé selon l'une quelconque des revendications 1 à 9, dans lequel la hauteur dans la direction circonférentielle de chaque surface du voisinage est sélectionnée pour être environ dix fois la distance moyenne entre les centres de deux points de tramage voisins.

11. Procédé selon l'une quelconque des revendications 1 à 9, dans lequel le voisinage est une partie significative de l'image.

12. Procédé selon l'une quelconque des revendications à 9, dans lequel le voisinage est sensiblement égal à l'image totale, de sorte que la position de point en demi-teinte modifie l'angle de trame de la trame.

13. Appareil pour modifier une image tramée pour la reproduction répétée le long d'une direction circonférentielle, l'appareil comprenant :
un moyen (905) pour analyser l'image au voisinage du raccord entre un bord supérieur et un bord inférieur de l'image pour déterminer n'importe quelle discordance de tramage entre le bord supérieur et le bord inférieur de l'image
**caractérisé en ce que** l'appareil comprend en outre
un moyen (907) pour modifier la position de points en demi-teinte dans le cas où une discordance de tramage se produit dans le voisinage pour éliminer la discordance de tramage au niveau du raccord de sorte que le voisinage consiste en une partie de dessus (605) et en une partie de dessous (603),
dans lequel le moyen pour modifier la position inclut :
- un moyen pour déterminer un déplacement qui amènerait les trames à s'aligner au niveau du raccord, la détermination de déplacement utilisant une corrélation entre une trame supérieure et inférieure, et
un moyen pour déplacer (907) les points en demi-teinte du voisinage du raccord de sorte que le déplacement relatif total au niveau du raccord est le déplacement déterminé, et de sorte qu'il n'y a aucun déplacement au niveau des frontières des parties de voisinage loin du raccord.

14. Appareil pour modifier une image tramée pour la reproduction répétée le long d'une direction circonférentielle selon la revendication 13 de sorte que l'appareil comprend un système de traitement incluant un processeur programmé pour effectuer ladite analyse de l'image au voisinage du raccord entre le bord supérieur et le bord inférieur de l'image pour déterminer toute discordance de tramage entre le bord supérieur et le bord inférieur de l'image, et pour effectuer ladite modification de la position de points en demi-teinte dans le voisinage pour éliminer la discordance de tramage au niveau du raccord.

15. Appareil pour modifier une image tramée pour la production répétée le long d'une direction circonférentielle selon l'une quelconque des 13 à 14, dans lequel la hauteur dans la direction circonférentielle de chaque surface du voisinage est sélectionnée pour faire environ dix fois la distance moyenne entre les centres de deux points de tramage voisins.

16. Appareil pour modifier une image tramée pour la production répétée le long d'une direction circonférentielle selon l'une quelconque des revendications 13 et 14, dans lequel le voisinage est sensiblement égal à l'image totale, de sorte que la position de point en demi-teinte modifie l'angle de trame de la trame.

17. Support de stockage portant un ou plusieurs segments de code lisibles par ordinateur qui amènent un ou plusieurs processeurs d'un système de traitement à exécuter un procédé selon l'une quelconque des revendications 1 à 12.
